# EUROPEAN PATENT APPLICATION

(11) **EP 4 674 527 A1**
(43) Date of publication of application: **07.01.2026**
(21) Application number: 24767054.0
(22) Date of filing: 01.03.2024
(51) Int. Cl.: B01J 20/34, B01J 20/20, C01B 32/36, C02F 1/28

(54) **METHOD FOR RECOVERING AND REGENERATING ACTIVATED CARBON**

(30) Priority: 09.03.2023 JP 2023036446
(71) Applicant: KURARAY CO., LTD., Okayama 710-0801 (JP)
(72) Inventor: IWASAKI, Hideharu, Osaka-shi, Osaka 530-8611 (JP); NAKADA, Haruo, Tokyo 100-0004 (JP); NISHIMURA, Shushi, Bizen-shi, Okayama 705-0025 (JP); YAMABATA, Akinori, Bizen-shi, Okayama 705-0025 (JP)
(74) Representative: Müller-Boré & Partner Patentanwälte PartG mbB
(86) International application number: PCT/JP2024/007768
(87) International publication number: WO 2024/185686

(57) **Abstract**

One aspect of the present invention relates to a method for recovering and regenerating activated carbon, the method comprising: heating an activated carbon molded body in an inert atmosphere and recovering activated carbon from the activated carbon molded body.

## Description

### Technical Field

The present invention relates to a method for recovering and regenerating activated carbon. In particular, the present invention relates to a method for recovering and regenerating activated carbon from an activated carbon molded body which is used for water treatment and adsorbs an organic compound and an organochlorine compound.

### Background Art

Although a trace amount of chlorine-containing trihalomethanes are contained in purified water such as clean water (tap water) and food processing water, there is a suspicion that chlorine-containing trihalomethanes are carcinogenic substances, and therefore the presence of chlorine-containing trihalomethanes in purified water is regarded as a problem. The chlorine-containing trihalomethanes include chloroform, bromodichloromethane, dibromochloromethane, and the like, and chloroform accounts for about 40 to 50% of chlorine-containing trihalomethanes contained in purified water. It is known that the chlorine-containing trihalomethanes are generated by a reaction between humic substance contained in raw water and chlorine used for sterilization. In addition, that is, it contains humic substance and reaction derivatives thereof generated by unreacted reaction and reaction with chlorine, although slightly.

Further, ground water and the like contain chlorine-containing haloethylenes such as trichloroethylene considered to be derived from semiconductor-related manufacturing industry or dry-cleaning industry at a higher concentration than chlorine-containing trihalomethanes in purified water. Since these are also generally toxic, their presence is regarded as problematic.

Under the circumstances described above, in recent increasing health consciousness, organic compound, and organochlorine compounds such as chlorine-containing trihalomethanes, and chlorine-containing haloethylenes contained in purified water, ground water, and the like are removed by a water purifier. As such a water purifier, a technique is known in which activated carbon treatment is performed by a purification apparatus including the activated carbon molded body, that is, an activated carbon filter to remove these substances.

On the other hand, at the present time when the SDGs are attracting attention, there is an increasing trend of recovering and regenerating powdered coal and/or granular coal from an activated carbon molded body in a water purifier and reusing the activated carbon.

As a method for regenerating activated carbon, a method for removing an organochlorine compound by performing a heat treatment under nitrogen has been proposed (see, for example, Patent Literature 1). In addition, a method of regenerating activated carbon in the presence of superheated water vapor has also been reported (see, for example, Patent Literature 2).

However, the technique described in the above-mentioned prior art is a technique for removing the adsorbate adsorbed on the activated carbon, and is not a technique for regenerating the activated carbon using the activated carbon molded body as it is. Therefore, the technique does not take into consideration the influence of factors other than the activated carbon constituting the activated carbon molded body, such as adhesion and agglutination on the activated carbon caused by substances generated when other components such as organic binders and water purifier cases are decomposed by heat treatment, on the activated carbon adsorption capacity, and therefore it is difficult to say that this method is sufficient as a regeneration method.

### Citation List

### Patent Literatures

Patent Literature 1: JP 2001-316106 A
Patent Literature 2: JP 2011-572 A

### Summary of Invention

Therefore, a main object of the present invention is to provide a method for recovering and regenerating activated carbon from an activated carbon molded body used for treatment of purified water, ground water, and the like, in which the activated carbon molded body is subjected to a regeneration step without being disassembled, and the activated carbon can be recovered and regenerated from the activated carbon molded body itself.

As a result of intensive studies to solve the above problems, the present inventors found that the above problems can be solved by a method having the following configuration, and completed the present invention by further conducting studies based on the findings.

That is, a method for recovering and regenerating activated carbon according to one aspect of the present invention includes heating an activated carbon molded body in an inert atmosphere and recovering activated carbon from the activated carbon molded body.

### Description of Embodiments

Hereinafter, embodiments according to the present invention is specifically described, but the present invention is not limited thereto.

The method for recovering and regenerating activated carbon according to the present embodiment includes heating an activated carbon molded body in an inert atmosphere and recovering activated carbon from the active molded body. According to the method of the present embodiment, the used activated carbon molded body can be regenerated and processed as it is without being disassembled, and the activated carbon can be recovered and the adsorption performance of the activated carbon can be restored and regenerated simply and at low cost.

First, an activated carbon molded body used in the present embodiment will be described.

The activated carbon molded body used in the recovery and regeneration method of the present embodiment is a molded body molded using activated carbon, a binder resin, and the like.

The activated carbon used in the activated carbon molded body of the present embodiment is not particularly limited as a raw material thereof, and examples thereof include plant-based carbonaceous materials (for example, plant-derived materials such as wood, sawdust, charcoal, fruit shells such as a coconut shell and a walnut shell, a fruit seed, a pulp production by-product, lignin, and waste molasses), mineral-based carbonaceous materials (for example, a material derived from a synthetic resin such as a phenol resin, polyvinylidene chloride, or an acrylic resin), synthetic resin-based carbonaceous materials (for example, a material derived from a synthetic resin such as a phenol resin, polyvinylidene chloride, or an acrylic resin), and natural fiber-based carbonaceous materials (for example, a material derived from natural fibers such as natural fibers such as cellulose and regenerated fibers such as rayon). These carbonaceous materials can be used singly or in combination of two or more kinds.

The activated carbon used in the activated carbon molded body of the present embodiment is obtained by carbonizing and/or activating the carbonaceous material as described above. When carbonization is required, the carbonization can be usually performed at, for example, about 400 to 800°C, preferably 500 to 800°C, and more preferably 550 to 750°C with oxygen or air blocked. As the activation method, either the gas activation method or the chemical activation method can be adopted, and the gas activation method and the chemical activation method may be combined. In particular, when used for water purification, a gas activation method with less residual impurities is preferable. The gas activation method can be performed by reacting the carbonaceous material carbonized with an activation gas (for example, water vapor, carbon dioxide gas, and the like) usually at, for example, 700 to 1100°C, preferably 800 to 980°C, more preferably about 850 to 950°C. In consideration of safety and reactivity, it is preferable to use a water vapor-containing gas containing 10 to 40 vol% of water vapor as the activation gas. The activation time and the rate of temperature rise are not particularly limited, and can be appropriately selected according to the type, shape, and size of the carbonaceous material to be selected.

The activated carbon molded body of the present embodiment is not particularly limited, and may be molded by either dry molding or wet molding using activated carbon as described above. Furthermore, the molded body preferably contains a thermoplastic resin as a constituent component thereof. On the other hand, a molded body including a thermosetting resin is not preferable because the thermosetting resin adheres at the time of regeneration or becomes a carbide derived from the thermosetting resin.

Examples of the dry activated carbon molded body include a molded body obtained by the following method.

First, activated carbon as described above, a binder resin such as polyethylene, polypropylene, or polyethylene terephthalate, and a stabilizer such as magnesium or a calcium salt such as oleic acid or stearic acid are mixed, and introduced into a partially or entirely limited space, for example, a mold.

The mold is heated in a heat convection furnace, a hydraulic press, or an infrared heater from about 140°C to about 300°C to sinter the polymer particles. The heating time and temperature vary and depend on the size (mass) of the mold and the shape of the molded article. For example, the heating time is typically from about 1 to about 100 minutes. Thereafter, the mold is cooled, and the porous product is taken out. In molding, a molding pressure is not generally required, but a pressure may be applied as necessary.

Examples of the wet activated carbon molded body include a molded body obtained by the following method.

First, the activated carbon and the fibrous binder as described above are mixed. Next, a mixture obtained by mixing activated carbon and a binder resin is dispersed in water to prepare a slurry. A wet activated carbon molded body can be produced by a suction filtration step of obtaining a pre-molded body by filtering the slurry while sucking the slurry, a drying step of obtaining a molded body by drying the pre-molded body, and a step of grinding an outer surface of the molded body as necessary.

The fibrous binder is not particularly limited as long as it can be fibrillated to entangle the carbonaceous material and shape, and can be widely used regardless of synthetic products and natural products. Examples of such a fibrous binder include acrylic fibers, polyethylene fibers, polypropylene fibers, polyacrylonitrile fibers, cellulose fibers, nylon fibers, aramid fibers, and pulp. The fiber length of the fibrous binder is preferably 4 mm or less.

Two or more kinds of the fibrous binders may be used in combination. It is particularly preferred to use polyacrylonitrile fibers or pulp as a binder. Accordingly, it is possible to further increase the density of the molded body and the strength of the molded body and to suppress deterioration in performance.

In a preferred embodiment, the water permeability of the fibrous binder is on the order of 10 to 150 mL in terms of CSF value. In the present embodiment, the CSF value is a value measured in accordance with the Canadian standard freeness method of JIS P 8121 "Testing methods for freeness of pulp". The CSF value can be adjusted, for example, by fibrillating the fibrous binder. When the CSF value of the fibrous binder is less than 10 mL, water permeability cannot be obtained, the strength of the molded body decreases, and the pressure loss may also increase. On the other hand, when the CSF value exceeds 150 mL, the powdered activated carbon cannot be sufficiently held, the strength of the molded body is lowered, and the adsorption performance may be poor.

The blending ratio of each component in the wet activated carbon molded body is usually preferably 3 to 10 parts by mass, more preferably 4.5 to 6 parts by mass of the fibrous binder based on 100 parts by mass of the activated carbon. When the wet activated carbon molded body includes other functional components to be described later, "with respect to 100 parts by mass of activated carbon" may be read and applied as "with respect to 100 parts by mass of the total of activated carbon and other functional components".

The wet activated carbon molded body may include other functional components as long as the effect of the present invention is not inhibited. Examples of the other functional component include a lead adsorbent such as titanosilicate or a zeolite-based powder capable of adsorbing and removing soluble lead, an ion exchange resin or a chelating resin, and various adsorbents including a silver ion and/or a silver compound for imparting antibacterial properties.

The activated carbon molded body is usually incorporated in a filter and used. In the recovery and regeneration method of the present embodiment, the activated carbon molded body is subjected to a heating treatment described later, and at that time, the activated carbon molded body may be taken out from the used activated carbon filter and heated, or the used activated carbon filter may be treated as it is without being disassembled.

In the present embodiment, the other configuration of the activated carbon filter is not particularly limited as long as the activated carbon molded body obtained above is contained, but the activated carbon filter may be a cylindrical filter further containing a packing or a center core in addition to the activated carbon molded body. The center core that can be used in the present embodiment is not particularly limited as long as it can be inserted into the hollow portion of the cylindrical filter to reinforce the cylindrical filter, but for example, a Trical pipe, a Netron pipe, or a ceramic filter is preferable. Further, a nonwoven fabric or the like can be wound around the outer periphery of the center core and/or the outer periphery of the activated carbon molded body.

In the present embodiment, the packing, the center core, the nonwoven fabric, and the like included in the activated carbon filter can be subjected to a heating treatment described later together with the activated carbon molded body as described above. This makes it possible to omit the step of taking out the activated carbon molded body from the filter for the recovery and regeneration treatment, which is very useful for industrial use.

In addition, the activated carbon filter is generally used as a cartridge by being filled in a housing. Such a cartridge is loaded in a water purifier and supplied for passing water, and as a water passing method, a total filtration method for filtering the entire amount of raw water or a circulation filtration method is adopted. In the present embodiment, when the housing (housing) is made of an organic material, the cartridge in which the activated carbon filter is filled in the housing can be subjected to a heating treatment described later. Furthermore, even if a known nonwoven fabric filter, various adsorbents, a mineral additive, a ceramic filter material, or the like is contained in the cartridge, heating can be performed as it is.

In the known method for regenerating activated carbon, it is necessary to first take out only the activated carbon from the activated carbon filter or the cartridge in order to remove the adsorbate from the activated carbon. The activated carbon filter includes not only activated carbon but also organic substances such as a binder resin, a core material, and a nonwoven fabric contained in the activated carbon molded body, and thus a complicated process for removing the binder resin, the core material, and the nonwoven fabric to obtain only activated carbon is required.

On the other hand, in the method of the present embodiment, the activated carbon can be directly recovered and regenerated from the activated carbon filter and the cartridge without being disassembled.

In the present embodiment, the activated carbon filter or the activated carbon molded body contained in the activated carbon filter after being used for a certain period of time is used in the activated carbon recovery/regeneration step. The water passing condition in the water purifier including the activated carbon filter is not particularly limited, but the activated carbon molded body or the activated carbon filter contained in the activated carbon filter of the water purifier which is used for passing water at a space velocity (SV) of 100 to 5000 hr⁻¹ and for which a predetermined time has elapsed is subjected to the regeneration step so that the pressure loss does not become extremely large. In this water passage process, the activated carbon molded body adsorbs free residual chlorine, trihalomethanes, other trace organic compounds and organochlorine compounds in the raw water and the permeate water.

In the present embodiment, the activated carbon can be regenerated from the activated carbon molded body in which at least one of the organic compound and the organochlorine compound is adsorbed. According to the method of the present embodiment, the activated carbon can be regenerated without directly contacting these organic compounds and organochlorine compounds attached to the activated carbon, which is also advantageous in terms of safety.

The recovery and regeneration method of the present embodiment includes heating an activated carbon molded body in an inert atmosphere. This heat treatment can be performed by charging an activated carbon molded body (or an activated carbon filter or cartridge,) into the reactor as it is and performing heating (heat treatment).

The inert atmosphere used in the present embodiment refers to an atmosphere having no activity (oxidation action) in the heat treatment temperature range in the present embodiment. Specifically, the atmosphere is preferably composed of a gas having an oxygen content rate of 5% or less, preferably 2% or less, more preferably 1% or less. By performing the heat treatment in such an inert atmosphere, the activated carbon is less likely to cause a reaction, and the reduction in the amount of activated carbon can be suppressed.

As such an inert atmosphere, an inert gas such as nitrogen, argon, water vapor, combustion gas, carbon dioxide, or carbon monoxide can be used. Among them, it is preferable to use water vapor from the viewpoint of shortening the recovery/regeneration time and improving the restoration rate at the time of regeneration. The reason for this is not limited, but is considered as follows.

Since water vapor has high heat conductivity, an adsorbate of activated carbon and organic substances other than activated carbon constituting an activated carbon molded body, an activated carbon filter, and a cartridge are quickly decomposed. Therefore, the activated carbon is volatilized and induced from the surface of the activated carbon before being adsorbed and fixed to the activated carbon, and decomposition proceeds without damaging the surface of the activated carbon. As a result, it is considered that the time required for recovery and regeneration can be shortened, and activated carbon having a high restoration rate can be regenerated.

The inert gas may be used one kind singly or in combination of two or more kinds thereof. The ratio in the case of mixing the plurality of gases is not particularly limited, and for example, in the case of nitrogen and water vapor, the molar ratio thereof is in the range of 1:100 to 100:1, more preferably in the range of 2:98 to 99:1, and still more preferably in the range of 5:95 to 95:5. The inert atmosphere of the present embodiment may include a trace amount of gas other than the inert gas as long as the gas does not exert an oxidizing action.

The flow rate of the inert gas (gas) in the heat treatment is not particularly limited because it depends on the amount of the activated carbon molded body existing in the reactor. Preferably, the flow rate is usually adjusted to a range of 0.01 L/min to 10,000 L/min, more preferably to a range of 0.1 L/min to 8000 L/min, and still more preferably to a range of 0.4 L/min to 4000 L/min in order to facilitate heat conduction to the activated carbon molded body and more easily sweep out the compound generated by decomposition.

In the present embodiment, the temperature of the heat treatment for heating the activated carbon molded body is preferably 500°C to 1200°C. If the temperature is too low, the adsorbed substance cannot be volatilized, decomposed, and volatilized, and may remain, which is not preferable. In addition, when the temperature is too high, pores of the regenerated activated carbon are blocked by heat, so that the adsorption power may decrease, which is not preferable. Therefore, heating is usually performed at 500°C to 1200°C, preferably 520°C to 800°C, and still more preferably 550°C to 800°C.

The time (heat treatment time) for heating the activated carbon molded body is not particularly limited, and can be appropriately determined depending on the size of the activated carbon molded body and the adsorption amount of the adsorbed substance, but is usually within the range of 1 minute to 300 minutes. If the heating time is too short, the adsorbate may not be sufficiently desorbed. On the other hand, when the heating time is too long, pores of the regenerated activated carbon are blocked by heat, so that the adsorption power may be reduced, which is not preferable. Therefore, the heating time is usually in the range of 1 minute to 300 minutes, preferably in the range of 5 minutes to 240 minutes, and still more preferably in the range of 10 minutes to 220 minutes.

In the present embodiment, the adsorbed substance adhering to the activated carbon and the organic substances such as the binder and the nonwoven fabric used in the activated carbon molded body and the filter are decomposed and volatilized by the heat treatment. At the time of decomposition, a part thereof is oxidatively decomposed into carbon dioxide, and the volatile matter includes carbon monoxide, various organic substances, hydrogen chloride, and the like. Since these substances cannot be released to the atmosphere as they are, if necessary, they are detoxified by absorption of acidic substances by alkaline scrubber, decomposition by flame combustion, decomposition by catalytic combustion, and the like.

In the present embodiment, the method of the heat treatment is not particularly limited, and the heat treatment can be performed in a batch type or a continuous type. As the batch type, any of a box furnace, a muffle furnace, and the like may be used. As the continuous furnace, any of a mesh belt, a roller hearth kiln, a pusher furnace, and the like may be used as long as it can be conveyed in the state of a molded body.

The heat-treated activated carbon molded body can be taken out after being cooled. The temperature at the time of extraction is preferably a temperature that is not oxidized by oxygen in the air. Therefore, it is preferable that the activated carbon molded body is cooled to 300°C or lower, more preferably 200°C or lower in the reactor and then exposed to the atmosphere.

In the present embodiment, although the activated carbon regenerated by the heat treatment may be held in the form of the molded body as it is even after the heat treatment, if necessary, the activated carbon is recrushed into a powdered activated carbon, a granular activated carbon and/or a fibrous activated carbon using a means such as a belt press, recovered, and reused.

The activated carbon regenerated by the recovery and regeneration method of the present embodiment has restored and regenerated adsorption performance and the like.

The present specification discloses various aspects of the technique as described above, and the main techniques are summarized below.

That is, a method for recovering and regenerating activated carbon according to a first aspect of the present invention includes heating an activated carbon molded body in an inert atmosphere and recovering activated carbon from the activated carbon molded body.

With such a configuration, the used activated carbon molded body can be treated as it is without being disassembled, and the activated carbon can be recovered and regenerated simply and at low cost.

A recovery and regeneration method according to a second aspect of the present invention is the recovery and regeneration method according to the first aspect, wherein the activated carbon molded body includes a thermoplastic resin as a constituent component. According to this configuration, it is possible to suppress sticking of the resin or formation of a carbide derived from the resin at the time of regeneration.

A recovery and regeneration method according to a third aspect of the present invention is the recovery and regeneration method according to the first or second aspect, wherein the activated carbon molded body is a molded body used for adsorbing at least one of an organic compound and an organochlorine compound. According to this configuration, the activated carbon can be regenerated without directly contacting the adsorbate attached to the activated carbon molded body, so that there is also an advantage in terms of safety.

A recovery and regeneration method according to a fourth aspect of the present invention is the recovery and regeneration method according to any one of the first to third aspects, wherein the activated carbon molded body is heated at a temperature of 500°C to 1200°C. Accordingly, it is considered that the adsorbate of the activated carbon, the organic binder other than the activated carbon constituting the activated carbon molded body, and the like can be collectively and efficiently removed.

A recovery and regeneration method according to a fifth aspect of the present invention is the recovery and regeneration method according to any one of the first to fourth aspects, wherein the inert atmosphere is an atmosphere including water vapor. As a result, the adsorbate of the activated carbon, the organic binder other than the activated carbon in the activated carbon molded body, and the like are quickly decomposed, so that the recovery/regeneration time can be shortened, and the activated carbon having a high restoration rate can be regenerated.

A recovery and regeneration method according to a sixth aspect of the present invention is the recovery and regeneration method according to any one of the first to fifth aspects, wherein the activated carbon molded body is heated together with an activated carbon filter including the activated carbon molded body.

A recovery and regeneration method according to a seventh aspect of the present invention is the recovery and regeneration method according to any one of the first to sixth aspects, wherein the entire cartridge including the activated carbon filter is heated together. Accordingly, there is an advantage that the activated carbon molded body does not need to be taken out from the activated carbon filter or the filter does not need to be removed from the cartridge, and the activated carbon can be recovered and regenerated by performing the treatment with the activated carbon filter or the cartridge as it is.

A recovery and regeneration method according to an eighth aspect of the present invention is the recovery and regeneration method according to any one of the first to seventh aspects, wherein the recovered activated carbon is at least one selected from powdered activated carbon, granular activated carbon, and fibrous activated carbon. Accordingly, it is considered that the above-described effect can be more reliably obtained.

### Examples

Hereinafter, the present invention is described more specifically with reference to Examples, but the present invention is not limited by Examples at all.

### <Example 1>

An activated carbon filter (KURAFILTER (registered trademark)) manufactured by KURARAY CO., LTD. was used as a water purifier for tap water for about 12 months to obtain a filter after adsorption. The filter was equipped with a packing made of polyethylene (PE), an inner tube (center core) made of PE, an acrylic fiber binder, and a polypropylene (PP) fiber nonwoven fabric, and the packing, the center core, and the nonwoven fabric were removed from the filter.

Thereafter, a sample for measuring an iodine adsorption amount and a methylene blue (MB) adsorption amount of the molded body was cut off, and the remaining molded body was placed in a box furnace connected to a superheated water vapor generator UPSSW-20H. Then, heat treatment was performed in a water vapor atmosphere (steam amount: 2 kg/Hr, oxygen content rate: 5 ppm (0.0005%)) at a temperature of 500°C for a treatment time (30 minutes). After 30 minutes, the temperature was cooled to 200°C, and the treated product was taken out. As a result, the acrylic fiber binder was decomposed and volatilized, and only activated carbon could be recovered. The obtained activated carbon was powdery and granular.

Then, for the sample for measuring the iodine adsorption amount and the methylene blue adsorption amount of the molded body obtained before the heat treatment, the iodine adsorption amount and the methylene blue adsorption amount were measured by the method described later.

Also for the activated carbon after the heat treatment, the iodine adsorption amount and the methylene blue adsorption amount were measured in the same manner.

The results are collectively shown in Table 1.

### <Example 2>

Activated carbon was recovered and regenerated in the same manner as in Example 1 except that the packing, the center core, and the nonwoven fabric were subjected to the heat treatment without being removed from the activated carbon filter. As a result, in the treated product after the heat treatment, the packing, the center core, the binder, and the nonwoven fabric were decomposed and volatilized, and only the activated carbon could be recovered. The obtained activated carbon was powdery and granular.

In Example 2, the activated carbon filter before the heat treatment was cut, and a part thereof was taken out and used as a sample for measuring an iodine adsorption amount and a methylene blue adsorption amount.

Then, with respect to the sample before the heat treatment and the activated carbon after the heat treatment, the iodine adsorption amount and the methylene blue adsorption amount were measured in the same manner as in Example 1. The results are shown in Table 1.

### <Example 3>

Recovery and regeneration were performed in a similar manner to Example 2 except that a used product was changed to an unused product (that is, the activated carbon filter was subjected to the test without being used). As a result, in the treated product after the heat treatment, the packing, the center core, the binder, and the nonwoven fabric were decomposed and volatilized, and only the activated carbon could be recovered. The obtained activated carbon was powdery and granular.

The acquisition of each sample, and the iodine adsorption amount and the methylene blue adsorption amount were measured in the same manner as in Example 2. The results are shown in Table 1.

### <Example 4>

Recovery and regeneration were performed in a similar manner to Example 2 except that the heating temperature was changed to 700°C. As a result, in the treated product after the heat treatment, the packing, the center core, the binder, and the nonwoven fabric were decomposed and volatilized, and only the activated carbon could be recovered. The obtained activated carbon was powdery and granular.

The acquisition of each sample, and the iodine adsorption amount and the methylene blue adsorption amount were measured in the same manner as in Example 2. The results are shown in Table 1.

### <Example 5>

The same procedures were carried out in the same manner as in Example 4, except that a water vapor atmosphere was introduced at a steam amount of 1 kg/Hr, an oxygen content rate of 5 ppm (0.0005%), a nitrogen content rate of 20L/min, and a volume ratio of water vapor : nitrogen was 50:50, in Example 2. The acquisition of each sample, and the iodine adsorption amount and the methylene blue adsorption amount were measured in the same manner as in Example 2. The results are shown in Table 1.

### <Example 6>

The same procedures were carried out in the same manner as in Example 4, except that a water vapor atmosphere was introduced at a steam amount of 200 g/Hr, an oxygen content rate of 5 ppm (0.0005%), a nitrogen content rate of 36 L/min, and a volume ratio of water vapor : nitrogen was 10:90, in Example 2. The acquisition of each sample, and the iodine adsorption amount and the methylene blue adsorption amount were measured in the same manner as in Example 2. The results are shown in Table 1.

### <Comparative Example 1>

Recovery and regeneration were performed in a similar manner to Example 2 except that a heat treatment was performed at 500°C under air. As a result, the activated carbon was burned together with other organic materials by the heat treatment, and the activated carbon could not be recovered. The iodine adsorption amount and the methylene blue adsorption amount of the activated carbon molded body sample before the heat treatment were measured in the same manner as in Example 2. The results are shown in Table 1.

### <Comparative Example 2>

Recovery and regeneration were performed in the same manner as in Comparative Example 1 except that the used activated carbon filter was changed to an unused activated carbon filter. As a result, the activated carbon was burned together with other organic materials by the heat treatment, and the activated carbon could not be recovered. The iodine adsorption amount and the methylene blue adsorption amount of the activated carbon molded body sample before the heat treatment were measured in the same manner as in Example 2. The results are shown in Table 1.

### <Comparative Example 3>

The same procedures were carried out in the same manner as in Example 4, except that the water vapor atmosphere was introduced at a steam amount of 1 kg/Hr, an oxygen content rate of 5 ppm (0.0005%), a nitrogen amount of 18 L/min, and oxygen of 2 L/min in Example 2. The acquisition of each sample, and the iodine adsorption amount and the methylene blue adsorption amount were measured in the same manner as in Example 2. The results are shown in Table 1.

### <Evaluation method>

### (Iodine adsorption amount and methylene blue adsorption amount)

The adsorption performance of activated carbon was evaluated by the iodine adsorption amount and the methylene blue adsorption amount.

The iodine adsorption amount and the methylene blue adsorption amount of the activated carbon molded body were measured according to the method specified in JIS K 1474 : 2014 (Test methods for activated carbon) by cutting out the central portion of the activated carbon molded body, drying at 115°C for one day and night with the nonwoven fabric and the center core removed, then pulverizing the resulting product to a particle size of 45 µm or less using a sample mill. The iodine adsorption amount and the methylene blue adsorption amount in the regenerated activated carbon were measured according to JIS K 1474 using the activated carbon obtained after heating the activated carbon molded bodies in Examples and Comparative Examples.

**[Table 1]**

| | Example 1 | Example 2 | Example 3 | Example 4 | Example 5 | Example 6 | Comparative Example 1 | Comparative Example 2 | Comparative Example 3 |
|---|---|---|---|---|---|---|---|---|---|
| Filter usage status | Used | Used | Unused | Used | Used | Used | Used | Unused product | Used |
| Packing | Absent | Present | Present | Present | Present | Present | Present | Present | Present |
| Center core | Absent | Present | Present | Present | Present | Present | Present | Present | Present |
| Nonwoven fabric | Absent | Present | Present | Present | Present | Present | Present | Present | Present |
| Heating atmosphere | Water vapor | Water vapor | Water vapor | Water vapor | Water vapor/nitrogen 50:50 | Water vapor/nitrogen 10:90 | Air | Air | Water vapor/nitrogen/oxygen |
| Heating temperature (°C) | 500 | 500 | 500 | 700 | 700 | 700 | 500 | 700 | 500 |
| Heat treatment time (min) | 30 | 30 | 30 | 30 | 60 | 90 | 30 | 30 | 30 |
| Iodine adsorption amount of molded body | 790 | 800 | 950 | 800 | 800 | 800 | 850 | 950 | 800 |
| MB adsorption amount of molded body | 80 | 90 | 100 | 90 | 90 | 90 | 100 | 100 | 90 |
| Iodine adsorption amount after heat treatment | 990 | 980 | 1010 | 1020 | 1000 | 850 | Measurement was not possible due to absence of residue | | Measurement was not possible due to surface whitening |
| MB adsorption amount after heat treatment | 100 | 100 | 110 | 110 | 100 | 90 | Measurement was not possible due to absence of residue | | Measurement was not possible due to surface whitening |

### (Discussion)

As is apparent from the results in Table 1, it was found that the activated carbon recovered and regenerated by the method of the present invention restored the adsorption performance (adsorption amount) as compared with the state after use (before heat treatment). In the method of the present invention, it was also confirmed that the activated carbon molded body can be treated together with the binder, and the activated carbon can be recovered. Furthermore, from the results of Example 2 to 6, it was also found that activated carbon can be recovered from the activated carbon filter without removing the packing, the center core, the nonwoven fabric, and the like. Comparison between Example 3 and other Examples showed that the method of the present invention can restore and regenerate used activated carbon into activated carbon in a state close to an unused product.

On the other hand, in Comparative Example 1 to 2 in which the heat treatment was performed using air instead of an inert gas, both the used product and the unused product burned together with the activated carbon, and no residue remained after the treatment. From the results of Comparative Example 3, it was also confirmed that even when water vapor and nitrogen gas were used, the surface of the activated carbon was whitened in the case of a gas further including oxygen, and the activated carbon could not be regenerated.

This application is based on Japanese Patent Application No. 2023-36446 filed on March 9, 2023, the contents of which are included in the present application.

Although the present invention has been appropriately and fully described above through the embodiments with reference to specific examples and the like in order to express the present invention, it should be recognized that a person skilled in the art can easily modify and/or improve the foregoing embodiments. Therefore, unless a change or improvement made by a person skilled in the art is at a level departing from the scope of rights of the claims described in the claims, the change or improvement is interpreted to be included in the scope of rights of the claims.

### Industrial Applicability

The present invention has wide industrial applicability in technical fields related to activated carbon, purified water using the activated carbon, and the like.

## Claims

1. method for recovering and regenerating activated carbon, the method comprising: heating an activated carbon molded body in an inert atmosphere and recovering activated carbon from the activated carbon molded body.

2. The method according to claim 1, wherein the activated carbon molded body includes a thermoplastic resin as a constituent component.

3. The method according to claim 1, wherein the activated carbon molded body is a molded body used for adsorbing at least one of an organic compound and an organochlorine compound.

4. The method according to claim 1, wherein a temperature at which the activated carbon molded body is heated is 500°C to 1200°C.

5. The method according to claim 1, wherein the inert atmosphere is an atmosphere including water vapor.

6. The method according to claim 1, wherein the activated carbon molded body is heated together with an activated carbon filter including the activated carbon molded body.

7. The method according to claim 6, wherein the activated carbon molded body is heated together with a cartridge including the activated carbon filter.

8. The method according to claim 1, wherein the recovered activated carbon is at least one selected from powdered activated carbon, granular activated carbon, and fibrous activated carbon.
